(19) Europäisches Patentamt
European Patent Office
Office européen des brevets

(11) **EP 3 764 109 A1**

(12) **EUROPEAN PATENT APPLICATION**

(43) Date of publication:
**13.01.2021 Bulletin 2021/02**

(21) Application number: **19185889.3**

(22) Date of filing: **11.07.2019**

(51) Int Cl.:
**G01R 23/00** (2006.01)     **G05B 15/02** (2006.01)
**G05F 1/66** (2006.01)     **G06F 17/50** (2006.01)
**G06Q 50/06** (2012.01)     **H02J 3/14** (2006.01)
**H02J 3/00** (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **University College Dublin
Belfield, Dublin 4 (IE)**

(72) Inventors:
• **Milano, Federico
Stillorgan, Co. Dublin (IE)**
• **Ortega Manjavacas, Alvaro
Madrid (ES)**

(74) Representative: **Purdylucey Intellectual Property
6-7 Harcourt Terrace
D02 FH73 Dublin 2 (IE)**

(54) **A METHOD FOR EVALUATING FREQUENCY REGULATION IN AN ELECTRICAL GRID**

(57)     The present invention provides a method for determining whether a device connected to a bus of an electrical grid is providing frequency regulation, wherein the electrical grid comprises a plurality of system buses to which devices are connected. The method comprises the steps of calculating a value for the rate of change of power of the device; comparing the calculated value for the rate of change of power of the device to a minimum threshold value; and if the calculated value is greater than the minimum threshold value, determining that the device is providing frequency regulation.

Figure 2

**Description**

**Field**

The present invention relates to the monitoring of an electrical grid. More particularly, the present invention relates to a method for evaluating whether a device connected to the grid is performing frequency regulation. The method can also be used to quantify the amount of frequency regulation being provided by the device.

**Background**

In order to maintain stability of the electrical grid, it is imperative to be able to provide frequency regulation. Historically, only conventional power plants which comprise synchronous devices were connected to the grid. Such devices include hydro-electric, fossil and nuclear fuel power plants. Such power plants are able to provide frequency regulation through the use of inertia. System operators typically remunerate the operators of these power plants for the quality of their frequency regulation, which is relatively easy to estimate.

In recent years, the number of non-synchronous devices in the form of distributed energy resources providing power to (or consuming power from) the electrical grid has increased significantly, with their contribution forecast to continue to grow. These include renewable energy power plants based on, e.g., wind turbines and solar panels, energy storage systems and thermostatically-controlled loads. The operators of these distributed energy resources are also required to provide frequency regulation. However, unlike conventional power plants, transmission system operators are currently not able to estimate the quality of the frequency regulation being provided by non-synchronous devices using existing tools, and therefore must trust that operators of the distributed energy resources are fulfilling their contractual obligations. This is a major concern for transmission system operators, as where adequate frequency control is not being provided by distributed energy resource operators, or indeed not available when needed, it exposes the transmission system operators to potential security issues. These include transient and frequency instabilities, which, in extreme cases, can lead to shed large parts of the load or, even, to system-wide blackouts.

Some transmission system operators measure the power generated by non-synchronous devices, and in the event of a contingency, the amount of frequency regulation being provided by a non-synchronous device is estimated based on variations in the generated power. However, this method of estimation is not reliable, as non-synchronous devices depend on energy sources that are stochastic in nature. Therefore, after a disturbance, it is difficult to identify whether the change of generated power from a renewable energy source is a consequence of its frequency control system, or for example due to a wind gust in the case of a wind turbine, or a cloud in the case of a solar panel.

Conventional state-estimation techniques for measuring the frequency control of a device require the knowledge of the model of the device and measurements of input and output quantities. Thus, such a technique is not suitable for use by transmission system operators, who typically do not have access to such models. Accordingly, there exists a need to be able to accurately estimate the frequency response and frequency control in an electrical grid which includes non-synchronous devices.

The object of the present invention is to provide a method which overcomes at least some of the above-mentioned problems.

**Summary**

According to a first aspect of the invention there is provided, as set out in the appended claims, a method for determining whether a device connected to a bus of an electrical grid is providing frequency regulation, wherein the electrical grid comprises a plurality of system buses to which devices are connected, the method comprising the steps of:

    calculating a value for the rate of change of power of the device;
    comparing the calculated value for the rate of change of power of the device to a minimum threshold value; and
    if the calculated value is greater than the minimum threshold value, determining that the device is providing frequency regulation.

In one embodiment, the method further comprises calculating the value for the rate of change of power of the device based on a measured value for a variation in bus frequency from a reference frequency value at each neighbouring bus of the device and a system admittance matrix.

In one embodiment, the method further comprises measuring the variation in bus frequency from a reference frequency value at each neighbouring bus of the device using a phasor measurement unit.

In one embodiment, the method further comprises measuring the variation in bus frequency from a reference frequency value at each neighbouring bus of the device using a phase locked loop.

In one embodiment, the method further comprises determining the minimum threshold value based on statistical properties of the device.

In one embodiment, the method further comprises defining a set of threshold values, the set of threshold values ranging from the minimum threshold value to a maximum threshold value, and if the device is determined to be providing frequency regulation, the method further comprises the step of:

> determining which threshold value from the set of threshold values corresponds to the highest value below the calculated value for the rate of change of power of the device; and
> quantifying the level of frequency regulation being provided by the device based on the determined threshold value.

In one embodiment, the method further comprises calculating the rate of change of power of the device, $\dot{p}_{B,i}(t)$ using the expression:

$$\dot{p}_{B,i}(t) = \sum_{k \in \mathcal{B}_i} \tilde{b}_{ik} \left[ \Delta\omega_{B,i}(t) - \Delta\omega_{B,k}(t) \right]$$

where $\mathcal{B}_i$ is the set of buses connected to bus $i$ and $\tilde{b}_{ik}$ is the susceptance of the branch connecting bus $i$ to bus $k$, $\Delta\omega_{B,i}(t)$ is the frequency variation at bus i and $\Delta\omega_{B,k}(t)$ is the frequency variation at bus k. Note that $\dot{p}_{B,i}(t)$ is not trivially the time derivative of the total power injection/generation at bus $i$. $\dot{p}_{B,i}(t)$ takes into account exclusively the variation of the regulated power at the bus and is transparent to passive power consumption, i.e. constant impedances connected at bus $i$.

In one embodiment, the method further comprises estimating the equivalent inertia of the device after a contingency based on the calculated rate of change of power of the device.

In one embodiment, the method further comprises estimating the equivalent inertia of the device after a contingency using the expression:

$$M_{\blacksquare,i}(t) \approx -\frac{\dot{p}_{B,i}(t)}{\frac{d^2}{dt^2}\left[\Delta\omega_{B,i}(t) - \tilde{x}_{\blacksquare,i}\, \dot{p}_{B,i}(t)\right]}, \qquad \text{for } t < t_i$$

where $M_{\blacksquare,i}(t)$ is the estimated equivalent inertia constant of the device, $\Delta\omega_{B,i}(t)$ is the frequency variation at bus i, $\tilde{x}_{\blacksquare,i}$ is determined based on the nominal power capacity of the device and $\dot{p}_{B,i}(t)$ is the rate of change of power of the device.

In one embodiment, the method further comprises quantifying the level of frequency regulation being provided by the device based on the estimated equivalent inertia of the device.

In one embodiment, the method further comprises estimating the rotor speed of the device based on the calculated rate of change of power of the device.

In one embodiment, the method further comprises estimating the rotor speed of the device based on the calculated rate of change of power of the device using the expression:

$$\Delta\omega_G(t) = \Delta\omega_{B,1}(t) - \tilde{x}_G\, \dot{p}_G(t)$$

where $\tilde{x}_G = 1/\tilde{b}_G$, $\dot{p}_{B,i}(t)$ is the rate of change of power of the device, $\Delta\omega_{B,1}(t)$ is the frequency variation at bus B and $\Delta\omega_G(t)$ is the frequency variation at bus G.

In one embodiment, the device is a non-synchronous device.

In one embodiment, the non-synchronous device comprises one of: a wind turbine, a solar panel, an energy storage system and a thermostatically-controlled load.

In one embodiment, the device is a synchronous device.

In one embodiment, the device comprises a subnetwork.

According to another aspect of the invention there is provided a computer implemented system for determining whether a device connected to a bus of an electrical grid is providing frequency regulation, wherein the electrical grid comprises a plurality of system buses to which devices are connected, the system configured with one or more modules to perform the steps of the method.

**Brief Description of the Drawings**

The invention will be more clearly understood from the following description of an embodiment thereof, given by way of example only, with reference to the accompanying drawings, in which:

Figure 1 shows a schematic of a black box device connected in antenna to the grid;
Figure 2 shows a schematic of a device that controls the frequency at bus 1;
Figure 3 shows a block diagram of the fundamental-frequency model of a Phase-Locked Loop (PLL); and
Figure 4 shows a block diagram of a device controlling the frequency at bus 1.

**Detailed Description of the Drawings**

The present invention provides a method for estimating whether a device connected to a bus or node of the electrical grid is providing frequency regulation. The inertial response being provided by a device and its machine rotor speed can also be evaluated using the techniques provided by the present invention. The device may be a non-synchronous device or a synchronous device.

The formula used to calculate the rate of change of power in the present invention does not require any knowledge of the model of a device, and thus is suitable for use by transmission system operators.

In accordance with the present invention, the rate of change of power of a device connected to the electrical grid is calculated using data measured from a plurality of buses on the electrical grid as well as data related to the topology of the electrical grid. The data measured from the buses comprises local frequency variation data measured in the vicinity of the device, while the data related to the topology of the electrical grid comprises transmission line impedance data.

The formula used to calculate the rate of change of power of a device connected to the electrical grid was developed from a Frequency Divider Formula (FDF) derived by the inventors of the present application. The FDF was derived using two different approaches. These two approaches were then combined to provide the formula from which the expression for calculating the rate of change of power of an unknown device connected to an electrical grid was derived. The steps in the development of the rate of change of power formula of the present invention starting from the derivation of the FDF using the two different approaches are set out in detail in the paragraphs below.

In the first FDF approach, the starting point of the definition of the FDF is the augmented admittance matrix and the relationship between current injections and voltages at network buses. In the second FDF approach, the starting point is based on the dc power flow formula.

**Frequency Divider Formula** - **First Approach:**

From circuit theory, it is well-known that the node voltages of an electric grid can be determined from the current injections into the nodes and the admittance matrix of the grid. Accordingly, in the first approach, the augmented admittance matrix is used to determine the FDF, which includes the transmission system connections and the electromotive forces (emfs) behind the internal reactances of the synchronous machines (devices). This matrix links bus voltages, generator emfs and current injections as follows:

$$\begin{bmatrix} \bar{\boldsymbol{i}}_G(t) \\ \bar{\boldsymbol{i}}_B(t) \end{bmatrix} = \begin{bmatrix} \bar{\boldsymbol{Y}}_{GG} & \bar{\boldsymbol{Y}}_{GB} \\ \bar{\boldsymbol{Y}}_{BG} & \bar{\boldsymbol{Y}}_{BB} \end{bmatrix} \begin{bmatrix} \bar{\boldsymbol{e}}_G(t) \\ \bar{\boldsymbol{v}}_B(t) \end{bmatrix} \qquad (1)$$

where the subscripts G and B stand for synchronous generation buses, and for load and transition buses, respectively; $\bar{v}_B(t)$ and $\bar{i}_B(t)$ are bus voltages and current injections, respectively, at network buses; $\bar{i}_G(t)$ are generator current injections; $\bar{e}_G(t)$ are generator emfs behind the internal generator impedance; $\bar{\mathbf{Y}}_{GG} \in \mathbb{C}^{m \times m}$; $\bar{\mathbf{Y}}_{BB} \in \mathbb{C}^{n \times n}$; $\bar{\mathbf{Y}}_{GB} \in \mathbb{C}^{m \times n}$; and $\bar{\mathbf{Y}}_{BG} \in \mathbb{C}^{n \times m}$. The sub-matrix $\bar{\mathbf{Y}}_{BB}$ is:

$$\bar{Y}_{BB} = \bar{Y}_{bus} + \bar{Y}_G \qquad (2)$$

where $\bar{\mathbf{Y}}_{bus}$ is the well-known network admittance matrix, and $\bar{\mathbf{Y}}_G$ is a diagonal matrix whose i-th diagonal element is 0 if no machine (device) is connected to bus $i$, and the inverse of a machine internal transient reactance if such a machine is connected to bus *i*.

Assuming the contribution of load currents is negligible (as commonly done in fault analysis), the relationship between bus voltages $\bar{v}_B(t)$ and emfs $\bar{e}_G(t)$ can be written as:

$$\overline{\mathbf{Y}}_{BG}\bar{e}_G(t) = -\overline{\mathbf{Y}}_{BB}\bar{v}_B(t) \qquad (3)$$

Differentiating (3) with respect to time and applying some simplifications, the FDF can be deduced as follows:

$$\boldsymbol{B}_{BG}\Delta\boldsymbol{\omega}_G(t) = -\boldsymbol{B}_{BB}\Delta\boldsymbol{\omega}_B(t) \qquad (4)$$

where $\Delta\boldsymbol{\omega}_G(t) \in \mathbb{R}^m$ is the vector of machine rotor speed variations; $\Delta\boldsymbol{\omega}_B(t) \in \mathbb{R}^n$ are the frequency variations at the system buses; and

$$\mathbf{B}_{BG} = \mathrm{Im}\{\overline{\mathbf{Y}}_{BG}\}, \qquad \mathbf{B}_{BB} = \mathrm{Im}\{\overline{\mathbf{Y}}_{BB}\},$$

where $\mathbf{B}_{BB}$ has same rank and symmetry properties as $\overline{\mathbf{Y}}_{BB}$ It should be understood that frequency variations are with respect to a common reference frequency, i.e. $\Delta\omega_B(t) = \omega_B(t) - \omega_o\mathbf{1}_n$, where $\omega_o$ is the fundamental synchronous frequency of the system, such as for example 50 Hz in Europe.

**Frequency Divider Formula** - **FDF Second Approach:**

The dc power flow formula is a simplification of the conventional power flow equations, which leads to a set of linear equations linking active power injections, $\boldsymbol{p}_B$, into nodes and bus voltage phase angles $\theta_B$, as follows:

$$\boldsymbol{p}_B = \mathbf{B}_{bus}\boldsymbol{\theta}_B \qquad (5)$$

where matrix $\mathbf{B}_{bus}$ is the conventional (non-augmented) susceptance matrix of the network well-known from power flow analysis ($\mathbf{B}_{bus} = \mathrm{Im}\{\overline{\mathbf{Y}}_{bus}\}$). The hypothesis and approximations that lead to the final expression of the dc power flow are also well-known. Assuming that these quantities are time-dependent as in transient stability analysis, and then differentiating (5) with respect to time leads to:

$$\dot{\boldsymbol{p}}_B(t) = \Omega_b\mathbf{B}_{bus}\Delta\boldsymbol{\omega}_B(t) = \widetilde{\mathbf{B}}_{bus}\Delta\boldsymbol{\omega}_B(t) \qquad (6)$$

where $\Omega_b$ is the synchronous reference angular speed in rad/s, e.g. 314.16 rad/s for a system operated at 50 Hz. Multiplying by $\Omega_b$ is necessary to take into account the fact that $\theta_B$ in (5) are in radians, while $\omega_B$ in (6) and in all of the other equations in this patent specification are expressed in per unit. The vector $\dot{\boldsymbol{p}}_B$ represents the Rate of Change of Power (RoCoP) injections into the generator nodes. In practice, this quantity can be calculated by numerically differentiating the measurements of active power.

To link expression (6) of the second approach and expression (4) of the first approach, an additional step is required. Matrix $\mathbf{B}_{BB}$ can be obtained from $\mathbf{B}_{bus}$ as follows:

$$\mathbf{B}_{BB} = \mathbf{B}_{bus} + \mathbf{B}_G \qquad (7)$$

where $\mathbf{B}_G$ is a diagonal matrix where the *i*-th element is $-1/x_{G,i}$, with $x_{G,i}$ the internal impedance of the generator connected to bus *i*; and 0 if no generator is connected to bus *i*. Merging together (4), (6) and (7), the following expression is obtained:

$$\dot{\boldsymbol{p}}_B(t) = -\Omega_b\left[\mathbf{B}_{BG}\Delta\boldsymbol{\omega}_G(t) - \mathbf{B}_G\Delta\boldsymbol{\omega}_{BG}(t)\right] \qquad (8)$$

or equivalently:

$$\dot{\boldsymbol{p}}_{\mathrm{B}}(t) = -\widetilde{\mathbf{B}}_{\mathrm{BG}}[\Delta\boldsymbol{\omega}_{\mathrm{G}}(t) - \Delta\boldsymbol{\omega}_{\mathrm{BG}}(t)] \qquad (9)$$

or equivalently:

$$\mathbf{B}_{\mathrm{BG}}[\Delta\boldsymbol{\omega}_{\mathrm{G}}(t) - \Delta\boldsymbol{\omega}_{\mathrm{BG}}(t)] = -\mathbf{B}_{\mathrm{bus}}\Delta\boldsymbol{\omega}_{\mathrm{B}}(t) \qquad (10)$$

where $\Delta\omega_{\mathrm{BG}}(t) \subset \Delta\omega_{\mathrm{B}}(t)$ is the subset of frequency deviations at the terminal buses of the synchronous machines; and $\mathbf{B}_{\mathrm{BG}} = \Omega_b\mathbf{B}_{\mathrm{BG}}$.

Expression (10) corresponds to the Frequency Divider Formula which is required to derive the expression for the rate of change of power of a device connected to a bus or node of the transmission grid. Expressions (8) and (9) indicate that a time-varying active power injection into the network bus modifies the frequency at that bus. A device with time-varying active power is thus, by definition, a frequency maker. Similarly, a device characterized by constant active power is a frequency taker.

Expression (6) makes it clear that any device, not only synchronous machines, can be frequency makers. Expression (8) as well as the FDF in (4) are thus accurate only as long as the active powers of loads and other non-synchronous generators connected to the grid are constant. But, as soon as loads or other devices show quick active power variations, they become frequency makers as much as the synchronous generators.

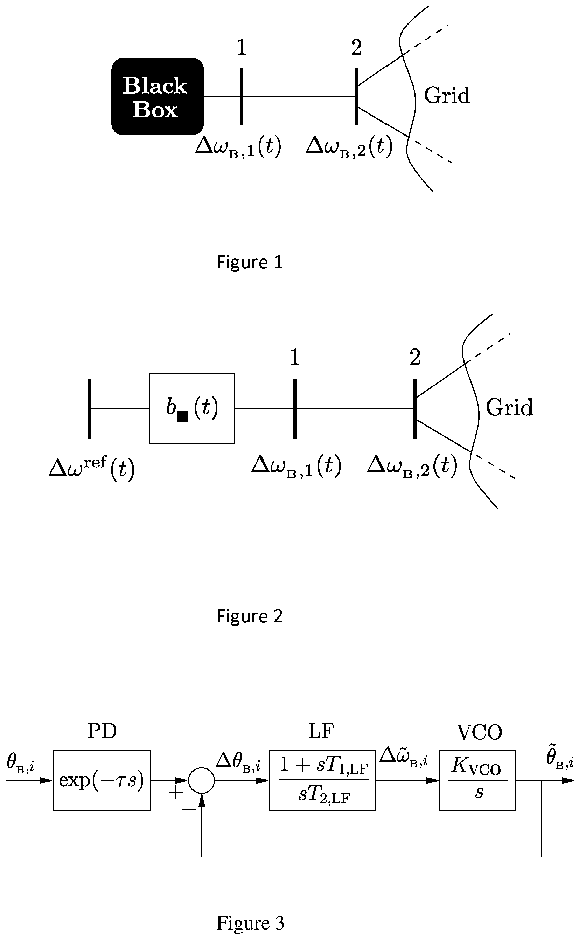

The expression for the rate of change of power of an unknown "black box" device connected to the transmission grid is then derived by using the FDF of expression (10). Figure 1 shows a schematic of such a black box device connected in antenna to the grid. As this device is a black box, it will be understood that the only data which can be obtained from the device are measurements at its terminal bus.

Particularizing expression (10) for bus 1 of the schematic of Figure 1, and assuming that the black box has an internal frequency, $\Delta\omega_{\blacksquare}(t)$, and an equivalent, possibly time-variant susceptance, $b_{\blacksquare}(t)$, both of which are unknown, leads to the following expression:

$$b_{\blacksquare}(t)[\Delta\omega_{\blacksquare}(t) - \Delta\omega_{\mathrm{B},1}(t)] = b_{12}[\Delta\omega_{\mathrm{B},1}(t) - \Delta\omega_{\mathrm{B},2}(t)] \qquad (11)$$

The term $b_{\blacksquare}(t)[\Delta\omega_{\blacksquare}(t) - \Delta\omega_{\mathrm{B},1}(t)]$ in expression (11) is not known. According to expression (9), expression (11) can be also written as:

$$\dot{p}_{\blacksquare}(t) = \tilde{b}_{12}[\Delta\omega_{\mathrm{B},1}(t) - \Delta\omega_{\mathrm{B},2}(t)] \qquad (12)$$

where $\tilde{b}_{12} = \Omega_b b_{12}$ and $\dot{p}_{\blacksquare}(t)$ corresponds to the rate of change of power (RoCoP) at the point of connection of the black-box device with the grid.

Expression (12) can be generalized by assuming that there is more than one branch connected to the monitored bus. Hence, assuming the $i$-th bus is being monitored, the rate of change of power of the device can be calculated as follows:

$$\dot{p}_{\mathrm{B},i}(t) = \sum_{k \in \mathcal{B}_i} \tilde{b}_{ik}[\Delta\omega_{\mathrm{B},i}(t) - \Delta\omega_{\mathrm{B},k}(t)] \qquad (13)$$

where $\mathcal{B}_i$ is the set of buses connected to bus $i$ and $\tilde{b}_{ik}$ is the susceptance of the branch connecting bus $i$ to bus $k$.

In expression (13), the term

$$\sum_{K \in \mathcal{B}_i} \tilde{b}_{ik} \Delta\omega_{\mathrm{B},i}(t)$$

represents the combined effect on the frequency of both the device connected to bus $i$ and the rest of the network; whereas the term

$$\sum_{K\in\mathcal{B}_i} \tilde{b}_{ik}\, \Delta\omega_{\mathrm{B},k}(t)$$

represents the effect of the whole network on the frequency at bus $i$. Subtracting the latter to the former, what remains is the effect of the black-box device on the frequency variation at bus $i$. Expression (13) is a direct consequence of the rationale of the FDF, which expresses the variation of the frequencies at any node of the system as an algebraic boundary value problem. Note that (13) captures the rate of change of "regulated" power exclusively while filters out power variations due to voltage variations and passive load impedances connected to bus $i$. Measuring the rate of change of power through the direct measurement of the power at bus $i$ is thus not the same as evaluating $\dot{p}_{\mathrm{B},i}(t)$ through (13).

It should be noted that the above expression for calculating the rate of change of power of a device only requires knowledge of the system admittance matrix, $\overline{\mathbf{Y}}_{\mathrm{bus}}$, (as $\overline{\mathbf{B}}_{\mathrm{bus}} = \mathrm{Im}\{\overline{\mathbf{Y}}_{\mathrm{bus}}\}$) as well as an estimate of the frequency variation at neighbouring buses to the device. This data can be obtained by the transmission system operators.

The system admittance matrix required in the calculation of the rate of change of power of a device can be determined using information about the topology of the grid. This information includes for example the location of generation and load nodes, the distribution of the transmission lines, etc.

An estimate of the frequency variation at neighbouring buses to the device which is required in the calculation of the rate of change of power of a device can be determined using any device which is able to estimate frequency from measured ac quantities. In one embodiment, each bus frequency can be estimated using a Phasor Measurement Unit (PMU). A PMU estimates the phase angle of a bus voltage phasor, typically using a Discrete Fourier Transform (DFT) with moving data window and synchronizing such a phase angle through a GPS reference time signal. Then, the absolute value of the frequency can be determined by means of computing the numerical derivative of the bus voltage phase angle, as follows:

$$f_{\mathrm{B},i} = \frac{1}{2\pi}\frac{\Delta\theta_{\mathrm{B},i}}{\Delta t} \quad (14)$$

An estimate of the variation in the frequency of a bus can then be computed based on a comparison between the calculated absolute value of the bus frequency and a predefined reference value. This predefined reference value can be for example the synchronous frequency, e.g. 50 Hz, or another time-varying reference such as the frequency at a pilot bus, or the frequency of the centre of inertia (CoI).

Alternatively, the variations in bus frequencies can be estimated through the use of a PLL. Figure 3 shows a block diagram of the fundamental-frequency model of a typical implementation of a PLL, namely, the Synchronous Reference Frame Phase-Locked Loop (SRF-PLL). It can be seen from this figure that the phase detector (PD) is modelled as a lag transfer function; the loop filter (LF) is a proportional integral (PI) controller; and the voltage-controlled oscillator (VCO) is implemented as an integrator. In this scheme, $\theta_{B,i}(t)$ is the phase angle of the bus voltage phasor at bus $i$, and $\theta_{B,i}(t)$ is the corresponding estimated quantity. The output of the LF is an estimation of the frequency variation or deviation $\Delta\omega_{\mathrm{B},i}(t)$ at bus $i$.

The present invention makes use of the calculated value of the rate of change of power of a device connected to the electrical grid to determine whether the device is providing frequency regulation. If a device is providing frequency regulation, it is known as a frequency maker, while a device which is not providing frequency regulation is known as a frequency taker.

A frequency taker is a device for which $\dot{p}_{\mathrm{B},i}(t) = 0$, $\forall t$, because, by construction of the FDF, there cannot be any variation of frequency within a passive circuit (boundary conditions on the frequency are imposed externally from the device). For a pure frequency taker, thus, the relationship:

$$\Delta\omega_{\blacksquare,i}(t) \equiv \Delta\omega_{\mathrm{B},i}(t) \quad\quad (15)$$

holds $\forall t$. Expression (15) is a direct consequence of the assumptions of the FDF. Note that for frequency takers, the value of $b_{\blacksquare,i}(t)$ is not important. Constant power loads fall in this category. While analytically irreproachable, the condition $\dot{p}_{\mathrm{B},i}(t) = 0$ is rarely satisfied in practice. Thus, in accordance with the present invention, a device is determined to be a frequency taker, and thus is not providing frequency regulation, if it satisfies the following condition:

$$\left|\dot{p}_{\mathrm{B},i}(t)\right| \approx \frac{\Delta p_{\mathrm{B},i}}{\Delta t} < \epsilon \qquad (16)$$

where $\varepsilon > 0$ is a given empirical threshold that is determined based on the statistical properties of a device to be monitored. Such statistical properties could include the standard deviation of the rate of change of power of a device connected to a particular bus over an extended time window. For example, the threshold of a wind turbine could be chosen based on statistical properties such as shape factor and autocorrelation of the wind at the location of the wind power plant. However, it should be clear that it is not necessary to know the specific nature of the device to define the threshold.

In one embodiment of the invention, the same threshold value is applied to all devices on the electrical grid. For example, the value for the threshold may be set at 0.06 % of the nominal frequency (e.g. 30 mHz for a system operating at 50 Hz).

Alternatively, different thresholds may be applied to different devices. This enables thresholds to be set which take into account the level of available inertia in the system, (which depends on the number of synchronous machines connected to the grid), and the impact on the grid of the frequency control being provided by a particular device.

In one embodiment of the invention, the transmission system operator can remunerate a power plant operator which is providing frequency regulation. This remuneration can be based on the amount and the time-response of the regulation. For example, a set of $\Delta t$ could be defined, one per each remuneration, with a different threshold defined for each $\Delta t$. In this scheme, the higher the threshold of frequency regulation provided by a power plant operator, the higher the remuneration awarded to the power plant operator by the system operator.

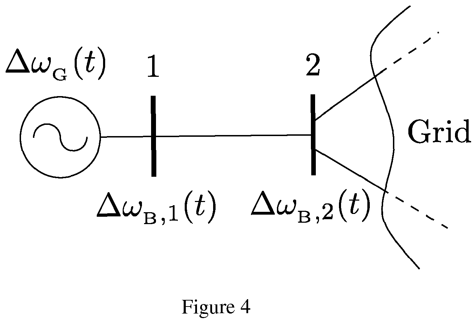

Expression (16) takes into account the fact that the only variations of power of a device connected to the transmission grid which are of interest are those that are sufficiently large to be able to actually vary the local frequency above a certain threshold and sufficiently fast to be comparable to the time scale of the inertial response and primary frequency control of synchronous machines. A block diagram of such a device controlling the frequency at bus 1 is shown in Figure 4.

In accordance with the present invention, if the rate of change of power of a device connected to the electrical grid is calculated to be less than this predetermined threshold, the device is determined not to be providing frequency regulation. Therefore, the device is a frequency taker.

Expression (16) can be satisfied in two cases. The first case is where the device does vary its power consumption or production, but the rate of change of power is small in the considered time frame. The second case is where the device exhibits small power variations, such as for example stochastic white noise.

Conversely, in accordance with the present invention, if the rate of change of power of a device connected to the electrical grid is calculated to be greater than this predetermined threshold (i.e. if $|\dot{p}_{\mathrm{B},i}(t)| > \varepsilon$), the device is determined to be providing frequency regulation. Therefore, the device is a frequency maker.

The rate of change of power expression of a device connected to the transmission grid can also be used to derive an expression for an estimate of the rotor speed of a machine or device based only on measurements at the terminal bus of the machine itself.

This expression involves the reformulation of equation (9) as follows:

$$\Delta \omega_{\mathrm{G}}(t) = \Delta \omega_{\mathrm{B},1}(t) - \tilde{x}_{\mathrm{G}}\, \dot{p}_{\mathrm{G}}(t) \qquad (17)$$

where $\tilde{x}_G = 1 / \tilde{b}_G$.

The present invention also enables the equivalent inertial response being provided by a frequency maker device to be evaluated. The derivation of the expression used to calculate this inertial response is set out in the paragraphs below.

The dynamics of the machine rotor speed of a synchronous machine can be approximated by the following well-known expression:

$$M_{\mathrm{G}}\dot{\omega}_{\mathrm{G}}(t) = p_m(t) - p_{\mathrm{G}}(t) \qquad (18)$$

where $M_{\mathrm{G}}$ is the inertia constant and $p_m(t)$ is the mechanical power provided by the turbine.
The mechanical power can be decomposed into three terms:

$$p_m(t) = p_{\mathrm{UC}}(t) + p_{\mathrm{PFC}}(t) + p_{\mathrm{AGC}}(t) \qquad (19)$$

where $p_{\mathrm{UC}}(t)$ is the power set point as defined by the solution of the unit commitment problem; $p_{\mathrm{PFC}}(t)$ is the regulating power due to primary frequency control (turbine governor) of the machine; and $p_{\text{AGC}}(t)$ is the regulating power due to the secondary frequency control (automatic generation control, AGC) if any, and if the machine participates in it. Hence, the active power injected by a synchronous machine into its terminal bus can be written as:

$$p_{\text{G}}(t) = p_{\text{UC}}(t) + p_{\text{PFC}}(t) + p_{\text{AGC}}(t) - M_{\text{G}}\dot{\omega}_{\text{G}}(t) \qquad (20)$$

Now, $p_{\text{UC}}(t)$ is piece-wise constant, while $p_{\text{AGC}}(t)$ varies slowly. So, of the four components above, the ones that actually contribute to modify the frequency at the machine bus and thus make the machine a frequency maker are $p_{\text{PFC}}(t)$ and the machine inertial response. Therefore:

$$\dot{p}_{\text{G}}(t) \approx \dot{p}_{\text{PFC}}(t) - M_{\text{G}}\ddot{\omega}_{\text{G}}(t) \qquad (21)$$

It has to be expected that in the very first instants after a contingency, the dominant effect is due to the inertial response but, in general, the two terms are deeply intertwined, and their effect cannot be separated. Note, however, that if a machine does not provide primary frequency control, then the lack of regulation can be inferred by observing the transient behaviour of $\dot{p}_{\text{G}}(t)$.

Accordingly, the expression (21) can be used to derive an expression to estimate the inertia of a synchronous device, or the equivalent inertia of any non-synchronous device in the transient following a contingency, as shown below. In this regard, it should be appreciated that while non-synchronous devices do not have a physical inertia, they can provide an inertia-like response through proper fast frequency control.

It will be appreciated that the time scale of the inertial response of a device is faster than that of its primary frequency control. Thus, in the first seconds after an event that causes a power unbalance in the system, we can assume that:

$$\dot{p}_{\text{PFC}}(t) \ll M_{\text{G}}\ddot{\omega}_{\text{G}}(t) \qquad (22)$$

Using (22), (21) can be rewritten as:

$$M_{\text{G}}\ddot{\omega}_{\text{G}}(t) \approx -\dot{p}_{\text{G}}(t), \quad \text{for } 0 < t < t_i \qquad (23)$$

with $t_i \approx 1$ s. Finally, substituting $\ddot{\omega}_{\text{G}}(t)$ for the second time derivative of the expression obtained from (17), and generalizing for any device, (23) becomes (24):

$$M_{\text{G}}(t) \approx -\frac{\dot{p}_{\text{G}}(t)}{\frac{\text{d}^2}{\text{d}t^2}[\Delta\omega_{\text{B},1}(t) - \tilde{x}_{\text{G}}\,\dot{p}_{\text{G}}(t)]}, \quad \text{for } t < t_i \qquad (24)$$

Expression (24) determines the physical inertia of synchronous machines if applied in the proper time scale. However, it should be understood that the device does not have to be a synchronous machine. In that case, (24) can be rewritten as an estimation of the *equivalent* inertia that such a device shows after a contingency, as follows:

$$M_{\blacksquare,i}(t) \approx -\frac{\dot{p}_{\text{B},\text{i}}(t)}{\frac{\text{d}^2}{\text{d}t^2}[\Delta\omega_{\text{B},i}(t) - \tilde{x}_{\blacksquare,i}\,\dot{p}_{\text{B},\text{i}}(t)]}, \quad \text{for } t < t_i \qquad (25)$$

where the parameter $\tilde{x}_{\blacksquare,i}$ can be defined for non-synchronous devices based on the nominal power capacity of the device and using typical values for synchronous machines of the same size.

It should be understood that the expression above has been derived based on the fact that, in per unit, all synchronous machines tend to have almost same parameters. The absolute values of such parameters depend thus only on the nominal power and voltage of the synchronous machine.

Thus, through the use of expression (25), the present invention can quantify the inertial response of a non-synchronous device in the first few seconds after a contingency. A large value of equivalent inertia in respect of a non-synchronous device is indicative of the provision/consumption of a large amount of active power in a short period of time as a consequence of the control by the device of the frequency (or, more likely in this time frame, its rate of change) responding to the contingency. It should be appreciated that a Transmission or Distribution System Operator will typically have information regarding the nominal power and voltage of the devices connected to the grid due to contractual reasons.

Through knowledge of the equivalent inertia of all non-synchronous devices, the present invention also enables the total inertia of the system to be estimated. This information is very valuable, as it enables the behaviour of the overall system both in normal operation and during events that cause power unbalances in the system to be predicted and understood.

The above expression for the estimate of the machine rotor speed is a valuable application of the rate of change of power expression, as it allows the machine rotor speed to be estimated using measurements at the machine bus only, with no information from neighbouring buses being required, This eliminates issues related to communication latency. It will be appreciated that an accurate estimation of device rotor speeds is very valuable for transmission system operators in order to provide proper monitoring of the system, and for taking adequate corrective and preventive actions. It should be understood that while the invention has been described in respect of estimating the frequency control and the inertial response of a device connected to the network, the same technique of the present invention can equally be used to determine whether a subnetwork is providing frequency control, as well as the inertial response being provided by the subnetwork following a contingency.

There are a number of advantages associated with the present invention. Firstly, the present invention enables the accurate determination of whether non-conventional devices connected to the grid are providing frequency regulation. This determination enables system operators to take action to prevent the occurrence of security issues due to insufficient frequency regulation being provided to the electrical grid. This can be achieved without requiring any knowledge of the model of a particular device, nor measurements of input and output quantities. Instead, the present invention enables the frequency regulation to be determined using data and measurements accessible to a system operator.

Furthermore, the present invention enables the inertial response of a synchronous device, or the equivalent inertia of a non-synchronous device in the transient following a contingency to be estimated, and consequently the total inertia of the system to be estimated. As a result of this information, the behaviour of the overall transmission system both in normal operation and during contingencies can be predicted. The present invention also provides a means for estimating machine rotor speeds which eliminates measurement delays.

Through the use of the information provided by the present invention, transmission system operators also have the facility to remunerate power plant operators based on the speed and the amount of their frequency regulation.

In the specification the terms "comprise, comprises, comprised and comprising" or any variation thereof and the terms include, includes, included and including" or any variation thereof are considered to be totally interchangeable and they should all be afforded the widest possible interpretation and vice versa.

The invention is not limited to the embodiments hereinbefore described but may be varied in both construction and detail.

**Claims**

1. A method for determining whether a device connected to a bus of an electrical grid is providing frequency regulation, wherein the electrical grid comprises a plurality of system buses to which devices are connected, the method comprising the steps of:

   calculating a value for the rate of change of power of the device;
   comparing the calculated value for the rate of change of power of the device to a minimum threshold value; and
   if the calculated value is greater than the minimum threshold value, determining that the device is providing frequency regulation.

2. The method of Claim 1, further comprising calculating the value for the rate of change of power of the device based on a measured value for a variation in bus frequency from a reference frequency value at each neighbouring bus of the device and a system admittance matrix.

3. The method of Claim 2, further comprising measuring the variation in bus frequency from a reference frequency value at each neighbouring bus of the device using a phasor measurement unit.

4. The method of Claim 2, further comprising measuring the variation in bus frequency from a reference frequency value at each neighbouring bus of the device using a phase locked loop.

5. The method of any of the preceding claims, further comprising determining the minimum threshold value based on statistical properties of the device.

6. The method of any of the preceding claims, further comprising defining a set of threshold values, the set of threshold values ranging from the minimum threshold value to a maximum threshold value, and if the device is determined to be providing frequency regulation, the method further comprises the step of:

   determining which threshold value from the set of threshold values corresponds to the highest value below the calculated value for the rate of change of power of the device; and
   quantifying the level of frequency regulation being provided by the device based on the determined threshold value.

7. The method of any of the preceding claims, further comprising calculating the rate of change of power of the device, $\dot{p}_{B,i}(t)$ using the expression:

$$\dot{p}_{B,i}(t) = \sum_{k \in \mathcal{B}_i} \tilde{b}_{ik} \left[ \Delta\omega_{B,i}(t) - \Delta\omega_{B,k}(t) \right]$$

where $\mathcal{B}_i$ is the set of buses connected to bus i and $\tilde{b}_{ik}$ is the susceptance of the branch connecting bus $i$ to bus $k$, $\Delta\omega_{B,i}(t)$ is the frequency variation at bus i and $\Delta\omega_{B,k}(t)$ is the frequency variation at bus k.

8. The method of any of the preceding claims, further comprising estimating the equivalent inertia of the device after a contingency based on the calculated rate of change of power of the device.

9. The method of Claim 8, further comprising estimating the equivalent inertia of the device after a contingency using the expression:

$$M_{\blacksquare,i}(t) \approx -\frac{\dot{p}_{B,i}(t)}{\frac{d^2}{dt^2}[\Delta\omega_{B,i}(t) - \tilde{x}_{\blacksquare,i}\,\dot{p}_{B,i}(t)]}, \quad \text{for } t < t_i$$

where $M_{\blacksquare,i}(t)$ is the estimated equivalent inertia constant of the device, $\Delta\omega_{B,i}(t)$ is the frequency variation at bus i, $\tilde{x}_{\blacksquare,i}$ is determined based on the nominal power capacity of the device and $\dot{p}_{B,i}(t)$ is the rate of change of power of the device.

10. The method of Claim 9, further comprising quantifying the level of frequency regulation being provided by the device based on the estimated equivalent inertia of the device.

11. The method of any of the preceding claims, further comprising estimating the rotor speed of the device based on the calculated rate of change of power of the device.

12. The method of Claim 11, further comprising estimating the rotor speed of the device based on the calculated rate of change of power of the device using the expression:

$$\Delta\boldsymbol{\omega}_G(t) = \Delta\omega_{B,1}(t) - \tilde{x}_G\,\dot{\boldsymbol{p}}_G(t)$$

where $\tilde{x}_G = 1/\tilde{b}_G$, $\dot{p}_{B,i}(t)$ is the rate of change of power of the device, $\Delta\omega_{B,1}(t)$ is the frequency variation at bus B and $\Delta\omega_G(t)$ is the frequency variation at bus G.

13. The method of any of the preceding claims, where the device is a non-synchronous device or a synchronous device.

14. The method of any of the preceding claims, wherein the device comprises a subnetwork.

15. A computer implemented system for determining whether a device connected to a bus of an electrical grid is providing frequency regulation, wherein the electrical grid comprises a plurality of system buses to which devices are connected, the system configured with one or more modules to perform the steps of the method of any of Claims 1 to 14.

Figure 1

Figure 2

Figure 3

$\Delta\omega_{\mathrm{G}}(t)$ 1 2 Grid

$\Delta\omega_{\mathrm{B},1}(t)$ $\Delta\omega_{\mathrm{B},2}(t)$

Figure 4

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Unknown: "Definition: Frequency Regulation", OpenEI, 6 August 2012 (2012-08-06), XP055633605, Retrieved from the Internet: URL:https://openei.org/wiki/Definition:Frequency_Regulation [retrieved on 2019-10-18] * the whole document * | 1,15 | INV. G01R23/00 G05B15/02 G05F1/66 G06F17/50 G06Q50/06 ADD. H02J3/14 H02J3/00 |
| A | US 2018/195493 A1 (GARCIA JORGE MARTINEZ [ES] ET AL) 12 July 2018 (2018-07-12) * abstract; figures 3-6 * | 1-15 | |
| A | WO 2016/029128 A1 (EAST PENN MFG CO [US]) 25 February 2016 (2016-02-25) * abstract; figures 1-6 * * paragraph [0035] * | 1-15 | |
| A | US 2017/179722 A1 (PORTER DAVID GLENN [US]) 22 June 2017 (2017-06-22) * abstract; figure 2 * | 1-15 | TECHNICAL FIELDS SEARCHED (IPC) |
| A | US 2011/125657 A1 (BOSS GREGORY JENSEN [US] ET AL) 26 May 2011 (2011-05-26) * abstract; figures 2-9 * | 1-15 | H02J G01R G05F |

The present search report has been drawn up for all claims

| Place of search | Date of completion of the search | Examiner |
|---|---|---|
| Munich | 23 October 2019 | Hartmann, Martin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 18 5889

This annex lists the patent family members relating to the patent documents cited in the above-mentioned European search report.
The members are as contained in the European Patent Office EDP file on
The European Patent Office is in no way liable for these particulars which are merely given for the purpose of information.

23-10-2019

| Patent document cited in search report | | Publication date | Patent family member(s) | | Publication date |
|---|---|---|---|---|---|
| US 2018195493 | A1 | 12-07-2018 | CN 107820539 A | | 20-03-2018 |
| | | | EP 3311026 A1 | | 25-04-2018 |
| | | | US 2018195493 A1 | | 12-07-2018 |
| | | | WO 2016202338 A1 | | 22-12-2016 |
| WO 2016029128 | A1 | 25-02-2016 | AU 2015305296 A1 | | 16-03-2017 |
| | | | CA 2958880 A1 | | 25-02-2016 |
| | | | CN 106663945 A | | 10-05-2017 |
| | | | EP 3183792 A1 | | 28-06-2017 |
| | | | US 2017163089 A1 | | 08-06-2017 |
| | | | WO 2016029128 A1 | | 25-02-2016 |
| US 2017179722 | A1 | 22-06-2017 | CA 3007781 A1 | | 22-06-2017 |
| | | | US 2017179722 A1 | | 22-06-2017 |
| | | | WO 2017106719 A1 | | 22-06-2017 |
| US 2011125657 | A1 | 26-05-2011 | CN 103109432 A | | 15-05-2013 |
| | | | DE 112010004525 T5 | | 31-10-2012 |
| | | | GB 2487849 A | | 08-08-2012 |
| | | | TW 201136091 A | | 16-10-2011 |
| | | | US 2011125657 A1 | | 26-05-2011 |
| | | | US 2012179631 A1 | | 12-07-2012 |
| | | | US 2014025547 A1 | | 23-01-2014 |
| | | | US 2019272514 A1 | | 05-09-2019 |
| | | | US 2019272515 A1 | | 05-09-2019 |
| | | | WO 2011061075 A2 | | 26-05-2011 |

EPO FORM P0459

For more details about this annex : see Official Journal of the European Patent Office, No. 12/82